# EUROPEAN PATENT APPLICATION

(11) **EP 3 306 504 A1**
(43) Date of publication of application: **11.04.2018**
(21) Application number: 16799157.9
(22) Date of filing: 15.04.2016
(51) Int. Cl.: G06F 21/31, G06F 21/32, G06F 21/36, H04L 9/32

(54) **MULTI-USER LOGIN METHOD, DEVICE AND STORAGE MEDIUM**

(30) Priority: 28.05.2015 CN 201510283700
(71) Applicant: Oneplus Technology (Shenzhen) Co., Ltd., Shenzhen, Guangdong 518000 (CN)
(72) Inventor: LIU, Tsung Hsun, Shenzhen Guangdong 518000 (CN)
(74) Representative: J A Kemp
(86) International application number: PCT/CN2016/079497
(87) International publication number: WO 2016/188268

(57) **Abstract**

Disclosed are a multi-user login method, device and storage medium. The method comprises: displaying selectable unlocking modes in a locked state; selecting, based on the selectable unlocking modes, a target unlocking mode, and acquiring, according to the target unlocking mode, unlocking information input by a user; and determining whether the unlocking information matches with pre-stored password information corresponding to the target unlocking mode, and if so, then unlocking a screen, and logging in with account number information corresponding to the password information.

## Description

### TECHNICAL FIELD

The invention relates to the technical field of mobile communications, and particularly to a multiuser login method and device and a storage medium.

### BACKGROUND

Along with continuous development of communication technology, mobile terminals have more and more functions. A mobile terminal, as a personal belonging, involves problems of privacy, security setting and the like. Whether a mobile terminal can be used by multiple different users becomes a problem urgent to be solved. However, only one account/password or one type of accounts/passwords may be set in a present mobile terminal, which cannot meet multiuser login and usage requirements.

### SUMMARY

On such a basis, it is necessary to provide, for the technical problem, a multiuser login method and device and a storage medium, which may conveniently and rapidly implement multiuser login.

Embodiments of the invention provide a multiuser login method, which may include that:
selectable unlocking modes are displayed in a screen lock state;
a target unlocking mode is selected on the basis of the selectable unlocking modes, and unlocking information input by a user is acquired according to the target unlocking mode; and
it is determined whether the unlocking information is matched with pre-stored password information corresponding to the target unlocking mode, and if the unlocking information is matched with the pre-stored password information corresponding to the target unlocking mode, unlocking and login with account information corresponding to the password information are performed.

In one embodiment, the step that login with the account information corresponding to the password information is performed may include that: the account information corresponding to the matched password information is queried according to pre-stored correspondences between password information and account information, and login with the required account information is performed.

In one embodiment, after the step that unlocking and login with the account information corresponding to the password information are performed, the method may further include that: user data information corresponding to the password information is queried according to pre-stored correspondences between password information and user data information.

In one embodiment, the selectable unlocking modes may include at least one of: a fingerprint unlocking mode, a code password unlocking mode or a pattern unlocking mode.

In one embodiment, after the step that the selectable unlocking modes are displayed, the method may further include that: it is monitored whether there is an event of selecting an unlocking mode within a preset period of time; if there is not an event of selecting an unlocking mode within the preset period of time, it is determined whether the unlocking modes include the fingerprint unlocking mode; and if the unlocking modes include the fingerprint unlocking mode, the fingerprint unlocking mode is determined as a selected unlocking mode.

The embodiments of the invention provide a multiuser login device, which may include:
an unlocking mode display module configured to display selectable unlocking modes in a screen lock state;
an unlocking information acquisition module configured to select a target unlocking mode on the basis of the selectable unlocking modes, and acquire unlocking information input by a user according to the target unlocking mode;
an unlocking information matching module configured to determine whether the unlocking information is matched with pre-stored password information corresponding to the target unlocking mode; and
an unlocking and login module configured to, in case of successful matching, perform unlocking and login with account information corresponding to the password information.

In one embodiment, the unlocking and login module may further be configured to query the account information corresponding to the matched password information according to pre-stored correspondences between password information and account information, and perform login with the queried account information.

In one embodiment, the device may further include: a user data information acquisition module configured to query user data information corresponding to the password information according to pre-stored correspondences between password information and user data information.

In one embodiment, the selectable unlocking modes may include at least one of: a fingerprint unlocking mode, a code password unlocking mode or a pattern unlocking mode.

In one embodiment, the unlocking mode display module may further be configured to monitor whether there is an event of selecting an unlocking mode within a preset period of time, when an event of selecting the unlocking mode is not received, determine whether the unlocking modes include the fingerprint unlocking mode, and when the unlocking modes include the fingerprint unlocking mode, determine the fingerprint unlocking mode as a selected unlocking mode.

According to the multiuser login method and device, password information corresponding multiple users is preset in a terminal, then unlocking information input by a user is acquired through an unlocking mode selected by the user, the unlocking information is matched with the password information of the user corresponding to the selected unlocking mode, and in case of successful matching, validity of the unlocking information is verified, so that login with account information corresponding to the password information corresponding to the selected unlocking mode may be conveniently and rapidly implemented.

The embodiments of the invention provide a multiuser login method, which may include that:
it is detected whether a mobile terminal enables a multiuser login mode in a screen lock state;
if the mobile terminal has enabled the multiuser login mode, account information of multiple users in the multiuser login mode is displayed;
account information selected by a user for login is acquired, a corresponding unlocking mode is acquired according to the account information, and an unlocking picture corresponding to the unlocking mode is displayed;
unlocking information input by the user is acquired through the unlocking picture;
it is determined whether the unlocking information is matched with pre-stored password information corresponding to the account information; and
in case of successful matching, unlocking and login with the account information are performed.

In one embodiment, after the step that unlocking and login with the account information are performed, the method may further include that: user data information corresponding to the account information selected by the user for login is queried according to pre-stored correspondences between account information of multiple users and user data information.

In one embodiment, the unlocking mode may include at least one of a fingerprint unlocking mode, a code password unlocking mode or a pattern unlocking mode.

The embodiments of the invention provide a multiuser login device, which may include:
a multiuser login mode determination module configured to detect whether a mobile terminal enables a multiuser login mode in a screen lock state;
a multiuser account information acquisition module configured to, when the mobile terminal has enabled the multiuser login mode, display account information of multiple users in the multiuser login mode;
an unlocking mode acquisition module configured to acquire account information selected by a user for login, acquire a corresponding unlocking mode according to the account information, and display an unlocking picture corresponding to the unlocking mode;
an unlocking information acquisition module configured to acquire unlocking information input by the user through the unlocking picture;
an unlocking information matching module configured to match the unlocking information and pre-stored password information corresponding to the account information; and
an unlocking and login module configured to, in case of successful matching, perform unlocking and login with the account information.

In one embodiment, the unlocking and login module may further be configured to query user data information corresponding to the account information selected by the user for login according to pre-stored correspondences between account information of multiple users and user data information.

In one embodiment, the unlocking mode may include at least one of a fingerprint unlocking mode, a code password unlocking mode, a pattern unlocking mode or a sliding unlocking mode.

The embodiments of the invention provide a storage medium, which may include a set of instructions, the instructions being executed to cause at least one processor to execute the following operations of:
displaying selectable unlocking modes in a screen lock state;
selecting a target unlocking mode on the basis of the selectable unlocking modes, and acquiring unlocking information input by a user according to the target unlocking mode; and
determining whether the unlocking information is matched with pre-stored password information corresponding to the target unlocking mode, and if YES, performing unlocking and login with account information corresponding to the password information.

The embodiments of the invention provide a storage medium, which may include a set of instructions, the instructions being executed to cause at least one processor to execute the following operations of:
detecting whether a mobile terminal enables a multiuser login mode in a screen lock state;
if the mobile terminal has enabled the multiuser login mode, displaying account information of multiple users in the multiuser login mode;
acquiring account information selected by a user for login, acquiring a corresponding unlocking mode according to the account information, and displaying an unlocking picture corresponding to the unlocking mode;
acquiring unlocking information input by the user through the unlocking picture;
determining whether the unlocking information is matched with pre-stored password information corresponding to the account information; and
in case of successful matching, performing unlocking and login with the account information.

According to the multiuser login method and device and the storage medium, in the multiuser login mode, the account information selected by the user for login is acquired, the unlocking mode corresponding to a corresponding account is acquired according to the account information, the corresponding unlocking information is acquired according to the unlocking mode selected by the user, the unlocking information is matched with the pre-stored password information corresponding to the selected account information, and in case of successful matching, validity of the unlocking information is verified, so that login with the selected account information may be conveniently and rapidly implemented.

### BRIEF DESCRIPTION OF DRAWINGS

FIG. 1 is a flowchart of a multiuser login method according to an embodiment.
FIG. 2 is a schematic diagram of an unlocking mode according to an embodiment.
FIG. 3 is a schematic diagram of an unlocking picture corresponding to a selected unlocking mode according to an embodiment.
FIG. 4 is a correspondences table, stored in a mobile terminal, of account information, password information and storage path of user data information of each user according to an embodiment.
FIG. 5 is a flowchart of steps after unlocking and login with account information corresponding to password information according to an embodiment.
FIG. 6A is a structure block diagram of a multiuser login device according to an embodiment.
FIG. 6B is a structure block diagram of a multiuser login device according to another embodiment.
FIG. 7 is a flowchart of a multiuser login method according to an embodiment.
FIG. 8 is a schematic diagram of displaying account information of multiple users according to an embodiment.
FIG. 9 is a schematic diagram of an unlocking mode corresponding to selected account information according to an embodiment.
FIG. 10 is a correspondences table, stored in a mobile terminal, of account information, password information and storage path of user data information of each user according to an embodiment.
FIG. 11 is a structure block diagram of a multiuser login device according to an embodiment.

### DETAILED DESCRIPTION

In order to make the purpose, technical solutions and advantages of the invention clearer, the invention will further be described below in combination with the drawings and embodiments in detail. It should be understood that the specific embodiments described here are only adopted to explain the invention and not intended to limit the invention.

Along with development of a mobile communication technology, it is possible for a private mobile terminal such as a mobile phone and a tablet computer to support use of multiple users. Multiple users log in the same mobile terminal with different accounts, and each user may set a using scenario, application software, system data, personal information and the like according to own requirement.

### First Embodiment

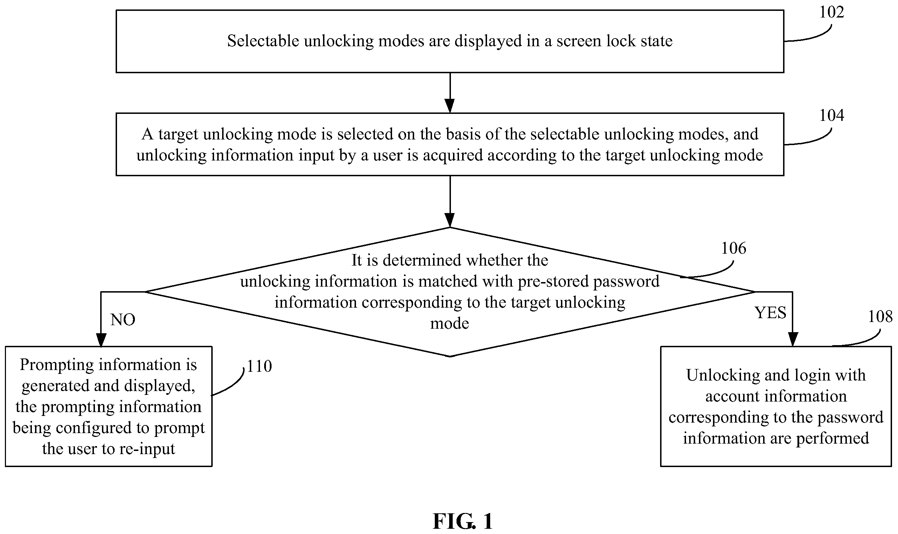

An embodiment, as shown in FIG. 1, provides a multiuser login method, which includes the following steps.

In Step 102, selectable unlocking modes are displayed in a screen lock state.

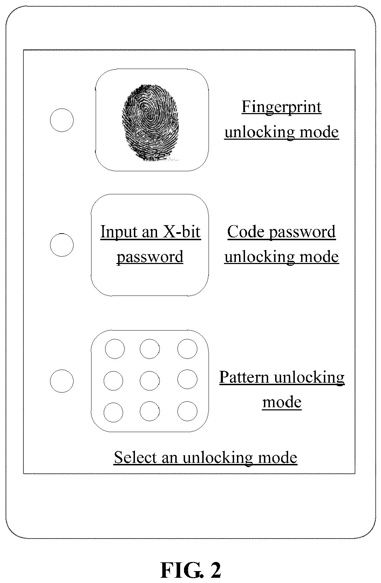

As shown in FIG. 2, in the embodiment, when a mobile terminal is triggered into the screen lock state, selectable unlocking modes of the mobile terminal are acquired.

The selectable unlocking modes include at least one of: a fingerprint unlocking mode, a code password unlocking mode or a pattern unlocking mode.

The selectable unlocking modes may be displayed on a Lock Screen picture of the mobile terminal.

In Step 104, a target unlocking mode is selected on the basis of the selectable unlocking modes, and unlocking information input by a user is acquired according to the target unlocking mode.

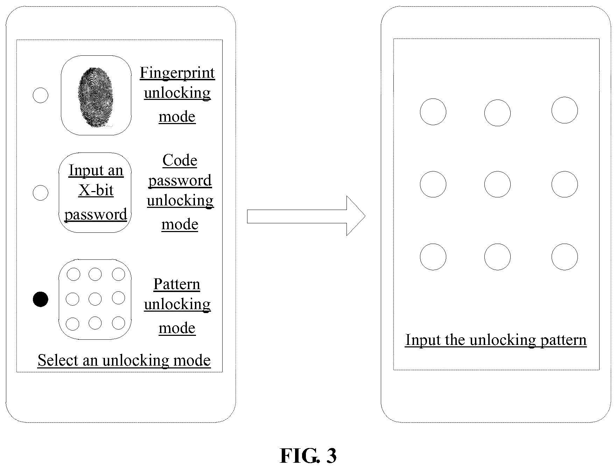

As shown in FIG. 3, in the embodiment, the user selects any unlocking mode for unlocking from the selectable unlocking modes displayed in Step 102, and after acquiring the target unlocking mode selected by the user, the mobile terminal displays the selected unlocking mode on an unlocking picture, so that the user may conveniently input the corresponding unlocking information.

In Step 106, it is determined whether the unlocking information is matched with pre-stored password information corresponding to the target unlocking mode, Step 108 is executed if YES, otherwise Step 110 is executed.

When using the mobile terminal for the first time, each user may perform initialization setting the mobile terminal. Initialization setting may include: setting of account information, an application scenario, system data, password information corresponding to the account information, user data information of the user and the like, which will not be described with examples one by one.

The password information includes at least one of fingerprint information, code password information and pattern information. In the embodiment, matching refers to that the unlocking information acquired in Step 104 and input by the user according to the selected unlocking mode is the same as the pre-stored password information corresponding to the unlocking mode.

In Step 108, unlocking and login with account information corresponding to the password information are performed, and the processing flow is ended.

In the embodiment, the account information is preset information configured to identify the user. The account information may include at least one of an account, an avatar and a nickname.

If the unlocking information in Step 106 is successfully matched with the pre-stored password information corresponding to the selected unlocking mode, the account information corresponding to the successfully matched password information is queried for login according to correspondences, preset by the user, between account information and password.

In Step 110, prompting information is generated and displayed, the prompting information being configured to prompt the user to re-input.

If the unlocking information in Step 106 is not successfully matched with the pre-stored password information corresponding to the selected unlocking mode, the user is prompted to re-input.

Furthermore, the method provided by the embodiment may further include that: when a number of re-input times of the user exceeds a preset threshold value, Step 102 is re-executed to prompt the user to reselect an unlocking mode.

According to the multiuser login method, password information corresponding to multiple users is preset in the mobile terminal, then unlocking information input by a user is acquired through an unlocking mode selected by the user, the unlocking information is matched with password information of the user corresponding to the selected unlocking mode, and in case of successful matching, validity of the unlocking information is verified, so that login with account information corresponding to the password information corresponding to the selected unlocking mode may be conveniently and rapidly implemented.

In an embodiment, the step that login with the account information corresponding to the password information is performed includes that: the account information corresponding to the matched password information is queried for login according to pre-stored correspondences between password information and account information.

In the embodiment, the correspondences between account information and corresponding password information of each user is stored in the mobile terminal, herein the password information includes at least one of fingerprint information, code password information and pattern information.

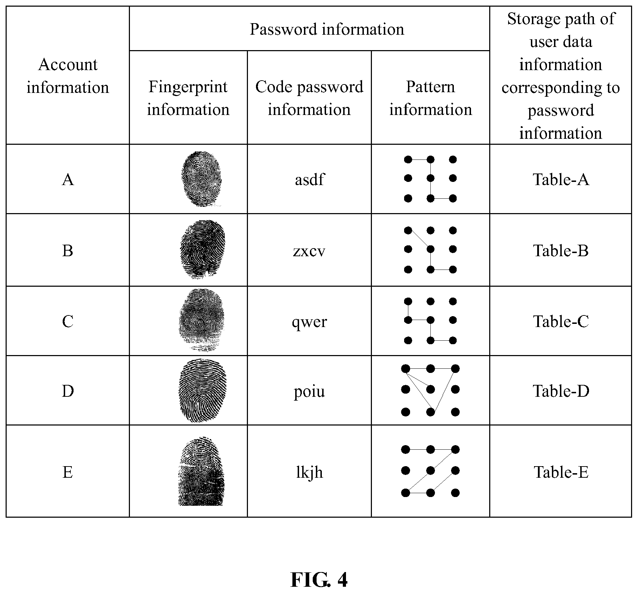

Furthermore, correspondences between account information of users and storage paths of corresponding user data information is also stored in the mobile terminal. FIG. 4 is a correspondences table, stored in a mobile terminal, of account information, password information and storage path of user data information of each user according to an embodiment. Herein, the code password information may be any combination, with a preset length, of characters and numbers, not limited to four English characters shown in FIG. 4; and the user data information includes personal information of the users, system data, public data, application software and files used by the users, and the like, which will not be elaborated one by one herein.

In the embodiment, the password information matched with the unlocking information input by the user in the correspondences table is acquired according to the unlocking information input by the user, then the account information corresponding to the matched password information is further acquired, and login with the account information is performed.

The account information corresponding to the matched password information may be directly acquired by query according to the preset correspondences between the password information and the account information, so that login with the account information may be conveniently and rapidly implemented.

In an embodiment, after the step that unlocking and login with account information corresponding to the password information are performed, the method further includes that: user data information corresponding to the password information is queried according to pre-stored correspondences between password information and user data information.

In the embodiment, the correspondences between the account information and corresponding password information of each user is stored in the mobile terminal, herein the password information includes at least one of fingerprint information, code password information and pattern information. Furthermore, the correspondences between the account information of the users and the storage paths of the corresponding user data information is also stored. FIG. 4 is a correspondences table, stored in a mobile terminal, of account information, password information and storage path of user data information of each user according to an embodiment. Herein, the code password information may be any combination, with a preset length, of characters and numbers, not limited to four English characters shown in FIG. 4; and the user data information includes personal information of the users, system data, public data, application software and files used by the users, and the like, which will not be elaborated one by one herein.

In the embodiment, the account information matched with the password information in the correspondences table is acquired according to the successfully matched password information, then the storage path of the user data information corresponding to the account information in the correspondences is further acquired, and the user data information is acquired.

Similarly, when each user performs initialization setting on the mobile terminal, correspondences among user data information, password information and a user data information storage path may also be set. The user may acquire the user data information corresponding to the successfully matched password information only after successful login with the account information. Therefore, user data security is ensured, different users may further set the mobile terminal according to own requirements, and convenience for use of the multiple users over the same mobile terminal is improved.

In one embodiment, the selectable unlocking modes include at least one of a fingerprint unlocking mode, a code password unlocking mode or a pattern unlocking mode.

### Second Embodiment

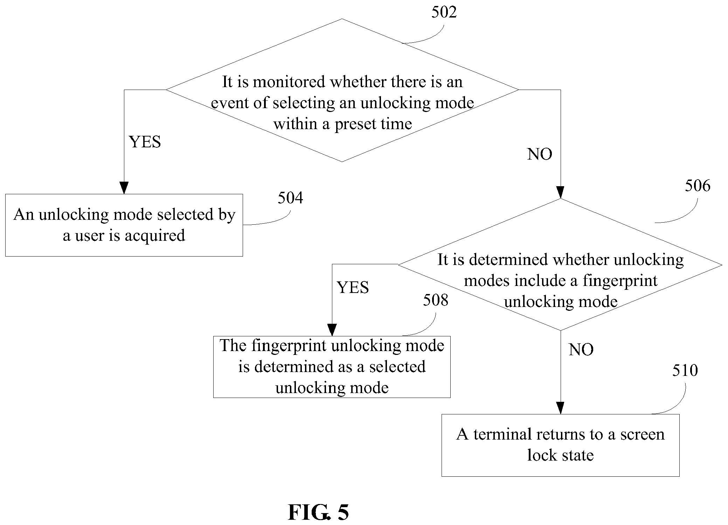

On the basis of the abovementioned embodiment, the embodiment introduces processing after selectable unlocking modes are displayed in detail. As shown in FIG. 5, in an embodiment, after the selectable unlocking modes are displayed, the step that the target unlocking mode is selected on the basis of the selectable unlocking modes further includes the following steps.

In Step 502, it is monitored whether there is an event of selecting the target unlocking mode within a preset period of time, Step 504 is executed if YES, otherwise Step 506 is executed.

The mobile terminal monitors whether the event of selecting the unlocking mode by the user is received within the preset period of time, and after the mobile terminal acquires the selected unlocking mode, the unlocking picture corresponding to the selected unlocking mode is further displayed, so that the user may conveniently input the unlocking information. In the embodiment, the preset period of time may be 10-30s.

In Step 504, the target unlocking mode selected by the user is acquired.

The mobile terminal acquires the unlocking mode selected by the user, and further acquires the unlocking information corresponding to the unlocking mode according to the selected unlocking mode.

In Step 506, it is determined whether the selectable unlocking modes include the fingerprint unlocking mode, Step 508 is executed if YES, and if NO, Step 510 is executed.

The pre-stored password information is queried to determine whether the fingerprint unlocking mode exists in the selectable unlocking modes of the terminal.

In Step 508, the fingerprint unlocking mode is determined as the selected target unlocking mode.

When the unlocking modes include the fingerprint unlocking mode, fingerprint unlocking is determined as the selected unlocking mode, and an unlocking picture corresponding to the fingerprint unlocking mode is further pushed for the user to input fingerprint information.

In Step 510, the terminal returns to the screen lock state.

When the unlocking modes do not include the fingerprint unlocking mode, the terminal returns to the screen lock state, and prompts the user to reselect an unlocking mode according to the displayed unlocking modes.

In a manner of monitoring whether there is the event of selecting the unlocking mode within the preset period of time, the user is only required to pre-store the fingerprint information, and is not required to repeatedly memorize complex code password information or unlocking pattern information, and unlocking and login with the account information may be conveniently and rapidly implemented in a fingerprint scanning manner.

### Third Embodiment

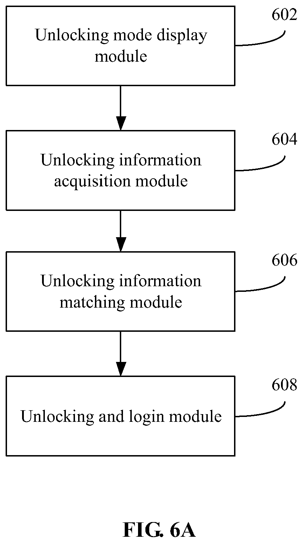

Another embodiment, as shown in FIG. 6A, provides a multiuser login device, which includes:
an unlocking mode display module 602 configured to display selectable unlocking modes in a screen lock state;
an unlocking information acquisition module 604 configured to select a target unlocking mode on the basis of the selectable unlocking modes, and acquire unlocking information input by a user according to the target unlocking mode;
an unlocking information matching module 606 configured to determine whether the unlocking information is matched with pre-stored password information corresponding to the target unlocking mode; and
an unlocking and login module 608 configured to, in case of successful matching, perform unlocking and login with account information corresponding to the password information.

In an embodiment, the unlocking and login module 608 is further configured to query the account information corresponding to the matched password information according to pre-stored correspondences between password information and account information.

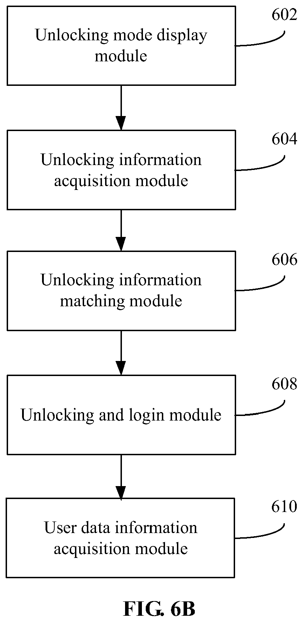

In an embodiment, as shown in FIG. 6B, the device further includes: a user data information acquisition module 610 configured to query user data information corresponding to the password information according to pre-stored correspondences between password information and user data information.

In an embodiment, the selectable unlocking modes include at least one of a fingerprint unlocking mode, a code password unlocking mode or a pattern unlocking mode.

In an embodiment, the unlocking mode display module 602 is further configured to monitor whether there is an event of selecting an unlocking mode within a preset period of time, when an event of selecting the unlocking mode is not received, determine whether the unlocking modes include the fingerprint unlocking mode, and when the unlocking modes include the fingerprint unlocking mode, determine the fingerprint unlocking mode as a selected unlocking mode.

### Fourth Embodiment

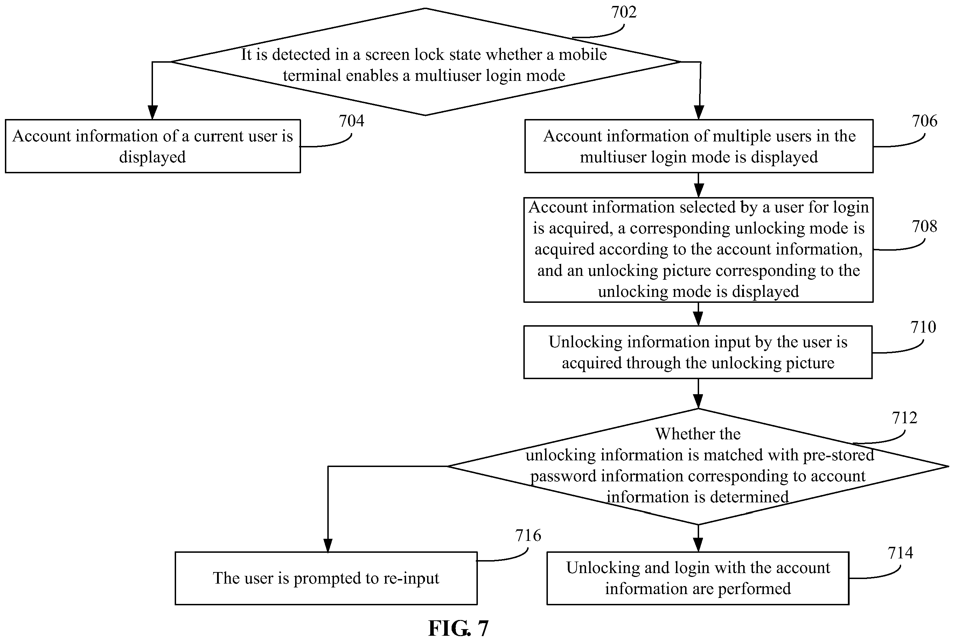

Another embodiment, as shown in FIG. 7, provides a multiuser login method, which includes the following steps.

In Step 702, it is detected in a screen lock state whether a mobile terminal enables a multiuser login mode, Step 704 is executed if NO, and if YES, Step 706 is executed.

In the embodiment, the multiuser login mode refers to that, when the mobile terminal is triggered into the screen lock state, a login interface of account information of multiple users is displayed in an unlocking picture. In the multiuser login mode, the multiple users preset information such as account information of the users, application scenarios, system data, password information corresponding to the account information and user data information corresponding to the account information in the same mobile terminal respectively, which will not be described with examples one by one. The account information may include at least one of an account, an avatar and a nickname.

In Step 704, account information of a current user is displayed.

If the mobile terminal has yet not enabled the multiuser login mode, the account information of the current user is displayed on a Lock Screen page. The mobile terminal implements login with account information through unlocking information input by a user, and a selectable login verification method is the same as a conventional art, and will not be elaborated herein.

In Step 706, account information of multiple users in the multiuser login mode is displayed.

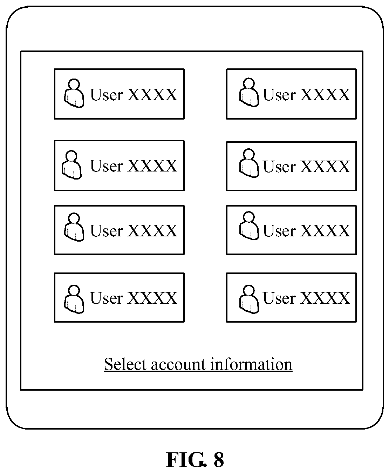

FIG. 8 shows account information of multiple users in a multiuser login mode according to an embodiment. The account information may include at least one of an account, an avatar and a nickname.

In Step 708, account information selected by a user for login is acquired, a corresponding unlocking mode is acquired according to the account information, and an unlocking picture corresponding to the unlocking mode is displayed.

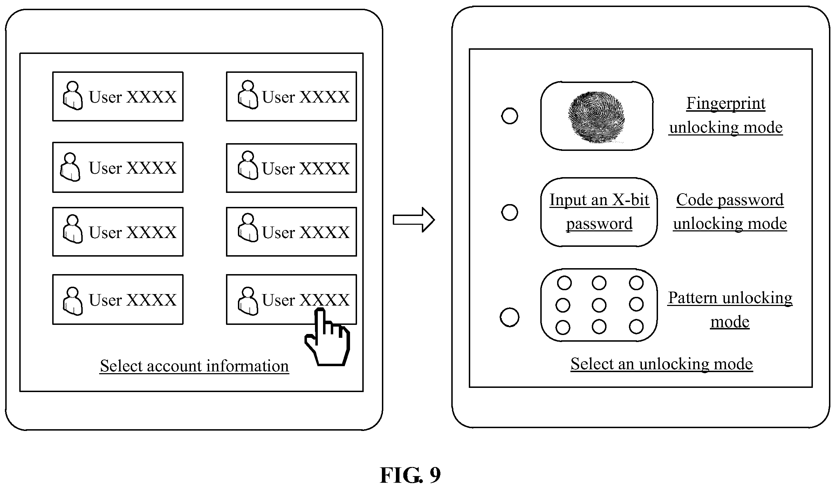

As shown in FIG. 9, after the account information selected by the user for login is acquired, the unlocking mode corresponding to the account information may be acquired according to pre-stored password information corresponding to the account information, and the unlocking picture of the unlocking mode corresponding to the selected account information may be displayed.

In Step 710, unlocking information input by the user is acquired through the unlocking picture.

The unlocking mode displayed by the unlocking picture may include at least one of a fingerprint unlocking mode, a code password unlocking mode or a pattern unlocking mode. The unlocking mode selected by the user is acquired, and the corresponding unlocking information is acquired according to the unlocking mode.

In Step 712, it is determined whether the unlocking information is matched with pre-stored password information corresponding to the account information, Step 714 is executed if YES, and if NO, Step 716 is executed.

The password information includes at least one of fingerprint information, code password information, pattern information and the like.

In the embodiment, matching refers to that the unlocking information acquired in Step 710 and input by the user according to the selected unlocking mode is the same as the pre-stored password information corresponding to the account information.

In Step 714, unlocking and login with the account information are performed.

If the unlocking information is successfully matched with the pre-stored password information corresponding to the account information, validity of the input unlocking information is verified, and the user may directly implement login with the account information of the user through the input unlocking information.

In Step 716, the user is prompted to re-input.

If the unlocking information in Step 712 is not successfully matched with the pre-stored password information corresponding to the selected unlocking mode, the user is prompted to re-input. Furthermore, when a number of re-input times of the user exceeds a preset threshold value, Step 702 is re-executed to prompt the user to reselect.

According to the multiuser login method, in the multiuser login mode, the account information selected by the user for login is acquired, the unlocking mode corresponding to a corresponding account is acquired according to the account information, the corresponding unlocking information is acquired according to the unlocking mode selected by the user, the unlocking information is matched with the pre-stored password information corresponding to the selected account information, and in case of successful matching, validity of the unlocking information is verified, so that login with the account information selected by the user may be conveniently and rapidly implemented.

In an embodiment, the unlocking mode includes at least one of a fingerprint unlocking mode, a code password unlocking mode or a pattern unlocking mode.

In an embodiment, after the step that unlocking and login with the account information are performed, the method further includes that: user data information corresponding to the account information selected by the user for login is queried according to pre-stored correspondences between account information of multiple users and user data information.

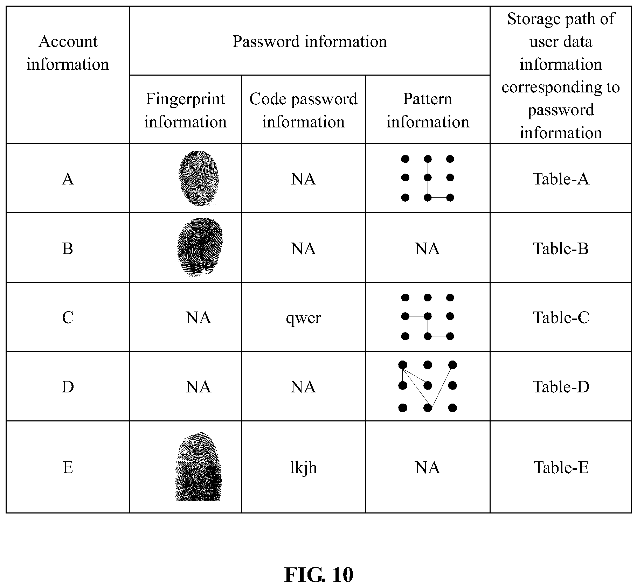

In the embodiment, correspondences between account information of each user and corresponding password information is stored in the mobile terminal, herein the password information includes at least one of fingerprint information, code password information and pattern information. Furthermore, correspondences between account information of users and storage paths of corresponding user data information is further stored. FIG. 10 is a correspondences table, stored in a mobile terminal, of account information, password information and storage path of user data information of each user according to an embodiment. Herein, the code password information may be any combination, with a preset length, of characters and numbers, not limited to four English characters shown in FIG. 10. NA represents that there is preset no corresponding password information. The user data information includes personal information of the users, system data, public data, application software and files used by the users, and the like, which will not be elaborated one by one herein.

In the embodiment, a storage path of user data information corresponding to the account information selected by the user in the correspondences table is acquired according to the account information selected by the user, and then the user data information corresponding to the selected account information is further acquired.

In such a manner, the user may acquire the user data information corresponding to the account information only after successful login with the account information. Therefore, user data security is ensured, different users may further set the mobile terminal according to own requirements, and convenience for use of the multiple users over the same mobile terminal is improved.

### Fifth Embodiment

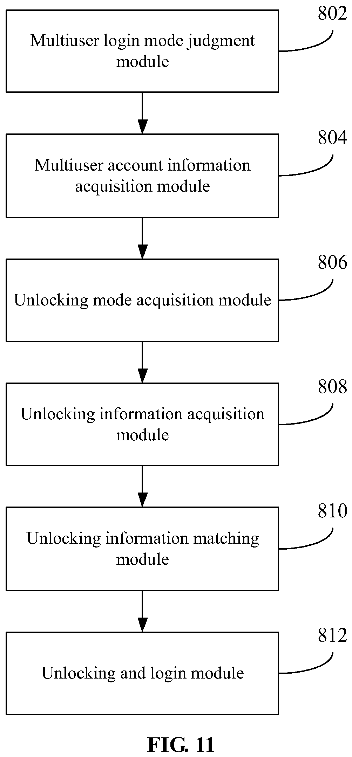

Another embodiment, as shown in FIG. 11, provides a multiuser login device, which includes: a multiuser login mode determination module 802 configured to detect in a screen lock state whether a mobile terminal enables a multiuser login mode; a multiuser account information acquisition module 804 configured to, when the mobile terminal has enabled the multiuser login mode, display account information of multiple users in the multiuser login mode; an unlocking mode acquisition module 806 configured to acquire account information selected by a user for login, acquire a corresponding unlocking mode according to the account information, and display an unlocking picture corresponding to the unlocking mode; an unlocking information acquisition module 808 configured to acquire unlocking information input by the user through the unlocking picture; an unlocking information matching module 810 configured to match the unlocking information and pre-stored password information corresponding to the account information; and an unlocking and login module 812 configured to, in case of successful matching, perform unlocking and login with the account information.

In an embodiment, the unlocking and login module 812 is further configured to query user data information corresponding to the account information selected by the user for login according to pre-stored correspondences between account information of multiple users and user data information.

In an embodiment, the unlocking mode includes at least one of a fingerprint unlocking mode, a code password unlocking mode, a pattern unlocking mode or a sliding unlocking mode.

Each technical characteristic of the abovementioned embodiments may be freely combined. For concise description, not all possible combinations of each technical characteristic in the abovementioned embodiments are described. However, combinations of these technical characteristics shall fall within the scope recorded in the specification without conflicts.

The above embodiments only express some implementation modes of the invention, and they are described specifically in detail, but cannot thus be understood as limits to the scope of the invention. It should be pointed out that, for those skilled in the art, a plurality of transformations and improvements may further be made without departing from the concept of the invention, and they all fall within the scope of protection of the invention. Therefore, the scope of protection of the invention shall be subject to the appended claims.

## Claims

1. A multiuser login method, comprising:
displaying selectable unlocking modes in a screen lock state;
selecting a target unlocking mode on the basis of the selectable unlocking modes, and acquiring unlocking information input by a user according to the target unlocking mode; and
determining whether the unlocking information is matched with pre-stored password information corresponding to the target unlocking mode, and if the unlocking information is matched with the pre-stored password information corresponding to the target unlocking mode, performing unlocking and login with account information corresponding to the password information.

2. The method according to claim 1, wherein the step of performing login with the account information corresponding to the password information comprises:
querying the account information corresponding to the matched password information according to pre-stored correspondences between password information and account information, and performing login with the queried account information.

3. The method according to claim 1, further comprising: after performing unlocking and login with the account information corresponding to the password information,
querying user data information corresponding to the password information according to pre-stored correspondences between password information and user data information.

4. The method according to claim 1, wherein the selectable unlocking modes comprise at least one of: a fingerprint unlocking mode, a code password unlocking mode or a pattern unlocking mode.

5. The method according to claim 4, further comprising: after displaying the selectable unlocking modes,
monitoring whether there is an event of selecting an unlocking mode within a preset period of time;
if there is not an event of selecting an unlocking mode within the preset period of time, determining whether the selectable unlocking modes comprise the fingerprint unlocking mode; and
if the selectable unlocking modes comprise the fingerprint unlocking mode, determining the fingerprint unlocking mode as a selected unlocking mode.

6. A multiuser login device, comprising:
an unlocking mode display module configured to display selectable unlocking modes in a screen lock state;
an unlocking information acquisition module configured to select a target unlocking mode on the basis of the selectable unlocking modes, and acquire unlocking information input by a user according to the target unlocking mode;
an unlocking information matching module configured to determine whether the unlocking information is matched with pre-stored password information corresponding to the target unlocking mode; and
an unlocking and login module configured to, in case of successful matching, perform unlocking and login with account information corresponding to the password information.

7. The device according to claim 6, wherein the unlocking and login module is further configured to query the account information corresponding to the matched password information according to pre-stored correspondences between password information and account information, and perform login with the queried account information.

8. The device according to claim 6, further comprising:
a user data information acquisition module configured to query user data information corresponding to the password information according to pre-stored correspondences between password information and user data information.

9. The device according to claim 6, wherein the selectable unlocking modes comprise at least one of: a fingerprint unlocking mode, a code password unlocking mode or a pattern unlocking mode.

10. The device according to claim 9, wherein the unlocking mode display module is further configured to: monitor whether there is an event of selecting an unlocking mode within a preset period of time; when an event of selecting the unlocking mode is not received, determine whether the unlocking modes comprise the fingerprint unlocking mode; and when the unlocking modes comprise the fingerprint unlocking mode, determine the fingerprint unlocking mode as a selected unlocking mode.

11. A multiuser login method, comprising:
detecting in a screen lock state whether a mobile terminal enables a multiuser login mode ;
if the mobile terminal has enabled the multiuser login mode, displaying account information of a plurality of users in the multiuser login mode;
acquiring account information selected by a user for login, acquiring a corresponding unlocking mode according to the account information, and displaying an unlocking picture corresponding to the unlocking mode;
acquiring unlocking information input by the user through the unlocking picture;
determining whether the unlocking information is matched with pre-stored password information corresponding to the account information; and
in case of successful matching, performing unlocking and login with the account information.

12. The method according to claim 11, further comprising: after performing unlocking and login with the account information,
querying user data information corresponding to the account information selected by the user for login according to pre-stored correspondences between the account information of the plurality of users and user data information.

13. The method according to claim 11, wherein the unlocking mode comprises at least one of: a fingerprint unlocking mode, a code password unlocking mode or a pattern unlocking mode.

14. A multiuser login device, comprising:
a multiuser login mode determination module configured to detect in a screen lock state whether a mobile terminal enables a multiuser login mode;
a multiuser account information acquisition module configured to, when the mobile terminal has enabled the multiuser login mode, display account information of a plurality of users in the multiuser login mode;
an unlocking mode acquisition module configured to acquire account information selected by a user for login, acquire a corresponding unlocking mode according to the account information, and display an unlocking picture corresponding to the unlocking mode;
an unlocking information acquisition module configured to acquire unlocking information input by the user through the unlocking picture;
an unlocking information matching module configured to match the unlocking information and pre-stored password information corresponding to the account information; and
an unlocking and login module configured to, in case of successful matching, perform unlocking and login with the account information.

15. The device according to claim 14, wherein the unlocking and login module is further configured to query user data information corresponding to the account information selected by the user for login according to pre-stored correspondences between the account information of the plurality of users and user data information.

16. The device according to claim 14, wherein the unlocking mode comprises at least one of a fingerprint unlocking mode, a code password unlocking mode, a pattern unlocking mode or a sliding unlocking mode.

17. A storage medium having stored therein a set of instructions that, when executed, cause at least one processor to execute the following operations of:
displaying selectable unlocking modes in a screen lock state;
selecting a target unlocking mode on the basis of the selectable unlocking modes, and acquiring unlocking information input by a user according to the target unlocking mode; and
determining whether the unlocking information is matched with pre-stored password information corresponding to the target unlocking mode, and if the unlocking information is matched with the pre-stored password information corresponding to the target unlocking mode, performing unlocking and login with account information corresponding to the password information.

18. A storage medium having stored therein a set of instructions that, when executed, cause at least one processor to execute the following operations of:
detecting in a screen lock state whether a mobile terminal enables a multiuser login mode;
if the mobile terminal has enabled the multiuser login mode, displaying account information of a plurality of users in the multiuser login mode;
acquiring account information selected by a user for login, acquiring a corresponding unlocking mode according to the account information, and displaying an unlocking picture corresponding to the unlocking mode;
acquiring unlocking information input by the user through the unlocking picture;
determining whether the unlocking information is matched with pre-stored password information corresponding to the account information; and
in case of successful matching, performing unlocking and login with the account information.
